# DEMANDE DE BREVET EUROPEEN

(11) **EP 2 361 807 A1**
(43) Date de publication de la demande: **31.08.2011**
(21) Numéro de dépôt: 11152207.4
(22) Date de dépôt: 26.01.2011
(51) Int. Cl.: B60R 1/02, B60R 1/08, G02B 26/08

(54) **Procédé de modification de l'etendue du champ de vision d'un miroir de retroviseur de véhicule**

(30) Priorité: 02.02.2010 FR 1050708
(71) Demandeur: Peugeot Citroën Automobiles SA, 78140 Vélizy-Villacoublay (FR)
(72) Inventeur: Guidez, Frédéric, 59400, CAMBRAI (FR)
(74) Mandataire: Vigand, Régis Louis Michel

(57) **Abrégé**

L'invention concerne un procédé de modification de l'étendue (19) du champ de vision d'un miroir (2) de rétroviseur (11) de véhicule en fonction de la vitesse du véhicule, à partir de la valeur du flux aérodynamique capté par le boîtier (1) du rétroviseur (11).

## Description

L'invention concerne le domaine des procédés de modification de l'étendue du champ de vision d'un miroir de rétroviseur de véhicule, et plus particulièrement le domaine des procédés de modification de la largeur du champ de vision du miroir de rétroviseur, de préférence par déformation du miroir.

Selon un art antérieur, par exemple décrit dans la demande de brevet allemand DE 19904097, il est connu un procédé de surveillance de l'angle mort du miroir du rétroviseur d'un véhicule comprenant une variation de la largeur du champ de vision du miroir en fonction d'un certain nombre de paramètres dont la vitesse du véhicule (voir notamment le paragraphe 32). Rien n'est toutefois précisé quant à la manière dont la vitesse du véhicule est mesurée et transférée au rétroviseur ou bien quant à la manière dont le rétroviseur fait varier son champ de vision.

L'invention s'intéresse en particulier au problème de l'évolution des besoins en largeur de champ de vision de l'oeil humain du conducteur d'un véhicule en fonction de la vitesse à laquelle ce véhicule se déplace.

La variation de l'étendue du champ de vision du miroir contemplée par l'invention correspond dans une certaine mesure aux besoins de variation essentiellement en largeur de champ de vision de l'oeil humain d'un conducteur de véhicule. A titre indicatif mais non limitatif en ce qui concerne le coeur de l'invention, le champ de vision de l'oeil humain sera considéré comme valant approximativement 180° à une vitesse de déplacement quasi-nulle, approximativement 100° à une vitesse de déplacement d'environ 40km/h, approximativement 30° à une vitesse de déplacement d'environ 130km/h. Plus la vitesse du véhicule augmente, plus le champ de vision de l'oeil humain se rétrécit, et plus la correction apportée doit élargir le champ de vision du miroir de rétroviseur. Des besoins de variation de champ de vision du miroir de rétroviseur en hauteur pourraient également être considérés, seuls ou en combinaison avec la variation de largeur, mais sont nettement moins critiques.

La variation de l'étendue du champ de vision du miroir est donc préférentiellement une augmentation du champ de vision du miroir pour compenser la réduction naturelle du champ de vision de l'oeil humain lorsque la vitesse de déplacement du véhicule et de son conducteur augmente. Il s'agit donc préférentiellement pour le miroir de rétroviseur d'augmenter la largeur de son champ de vision pour compenser au moins partiellement la diminution du champ de vision naturel de l'oeil humain lorsque sa vitesse de déplacement par rapport à son environnement augmente.

Conjointement à l'augmentation de la largeur du champ de vision du miroir de rétroviseur en fonction de l'augmentation de la vitesse du véhicule, il est réalisé une diminution de la profondeur du champ de vision du miroir de rétroviseur, car plus le conducteur roule vite, moins il a de chances de voir surgir brutalement du lointain un autre véhicule qui voudrait le dépasser.

Afin d'éviter une longue chaîne de transmission d'information et ou d'énergie, source de complexité et de dysfonctionnement, l'invention s'attache à ramener le capteur de flux aérodynamique au plus près de l'actionneur de déformation du miroir, à savoir au niveau du boîtier lui-même du rétroviseur. Cela n'était pas évident pour au moins deux raisons, à savoir tout d'abord que la disposition d'un capteur sur une excroissance du véhicule aussi exposée que le rétroviseur promettait à priori une certaine complexité mécanique déjà dissuasive en soi, et ensuite que l'information de vitesse du véhicule étant déjà généralement disponible sur le réseau de bord du véhicule, l'homme du métier aurait la tendance naturelle à vouloir la récupérer et l'utiliser pour commander la déformation du miroir de rétroviseur.

La valeur du flux aérodynamique est en fait la valeur d'une partie du flux aérodynamique que rencontre le boîtier du rétroviseur, et plus précisément la partie de flux aérodynamique que le boîtier mesure directement ou indirectement à l'aide d'un élément du boîtier lui-même de rétroviseur.

Pour cette variation de champ de vision du miroir du rétroviseur, comme pour toutes les fonctions avantageuses offertes au conducteur du véhicule, il peut être envisagé une possibilité d'inhibition, notamment à la commande du conducteur ou sur déclenchement par certains événements. Selon l'invention, il est prévu un procédé de modification de l'étendue du champ de vision d'un miroir de rétroviseur de véhicule en fonction de la vitesse du véhicule, à partir de la valeur du flux aérodynamique capté par le boîtier du rétroviseur.

Selon l'invention, il est aussi prévu un rétroviseur de véhicule comprenant un boîtier et un miroir à étendue de champ de vision variable, caractérisé en ce qu'il comprend aussi : un capteur de flux aérodynamique disposé sur la surface extérieure du boîtier ; un actionneur de déformation du miroir de manière à faire varier l'étendue de son champ de vision ; des moyens de transmission entre le capteur et l'actionneur disposés de manière à ce que le champ de vision du miroir varie en fonction du flux aérodynamique capté par le capteur. Selon l'invention il est encore prévu un véhicule comprenant un rétroviseur de véhicule selon l'invention. L'invention concerne également tout rétroviseur ou tout véhicule mettant en oeuvre le procédé selon l'invention.

De préférence, la modification de l'étendue du champ de vision du miroir de rétroviseur est réalisée par déformation du miroir. Pour faire varier le champ de vision du miroir, l'invention s'attache préférentiellement à déformer le miroir, ce qui permet une variation importante du champ de vision de ce miroir tout en conservant une largeur de miroir et une taille de rétroviseur qui restent très raisonnables pour ne pas dire limitées. Il pourrait aussi être envisagé des opérations d'ajout de portions de miroir ou des opérations de substitution d'une partie de miroir à une autre partie de miroir. La déformation du miroir consiste principalement en un changement de rayon de courbure d'une partie du miroir en particulier, ou en un changement de sa sphéricité en général.

De préférence, l'énergie du flux aérodynamique capté par le boîtier du rétroviseur est transmise au miroir du rétroviseur. Préférentiellement, les moyens de transmission du rétroviseur sont des moyens de transmission de l'énergie du flux aérodynamique capté par le capteur du boîtier du rétroviseur vers l'actionneur de déformation du miroir du rétroviseur.

La transmission de l'énergie du flux aérodynamique elle-même jusque vers l'actionneur du miroir de rétroviseur présente l'avantage d'être une chaîne plus directe que ne l'aurait été une transformation de cette énergie en une information, suivie d'une transmission de cette information, complétée par une transformation à nouveau mais cette fois de l'information en énergie pour déformer le miroir de rétroviseur.

Compte tenu d'une part de l'aspect volume très limité du boîtier de rétroviseur et d'autre part de l'aspect protubérance particulièrement exposée ressortant de la silhouette générale du véhicule, par exemple aux chocs et aux efforts, une chaîne de transmission d'énergie est particulièrement plus avantageuse de par son aspect plus direct, plus simple et plus robuste.

De préférence, la transmission d'énergie comprend une première phase de transformation d'énergie mécanique provenant du flux aérodynamique en énergie électrique suivie d'une deuxième phase de transmission de l'énergie électrique suivie d'une troisième phase de transformation de ladite énergie électrique en énergie mécanique déformant le miroir. Ce procédé préférentiel utilisant la transformation de l'énergie mécanique issu du flux aérodynamique en énergie électrique avant de l'amener à l'actionneur de déformation du miroir est particulièrement plus avantageux qu'une transmission directe sous forme d'énergie mécanique, à cause de la mobilité angulaire de réglage qu'il faut pouvoir conserver au miroir de rétroviseur, notamment latéralement de gauche à droite et vice et versa, par exemple d'une valeur d'au moins plus ou moins 10°. En effet, la transmission directe sous forme d'énergie mécanique nécessiterait un système relativement fragile et complexe pour pouvoir transmettre mécaniquement l'énergie tout en conservant un débattement angulaire latéral du miroir qui soit suffisamment important pour permettre à chaque conducteur de véhicule un réglage aisé.

La phase de transmission de l'énergie électrique comprend avantageusement une étape d'amplification de l'énergie électrique, car l'actionneur du miroir consommera probablement plus d'énergie que n'en fournira le capteur de flux aérodynamique. Dans le cas contraire, cette étape d'amplification devient superflue et pourra être supprimée. L'absence d'étape d'amplification rend le système mettant en oeuvre le procédé plus simple, notamment dans la mesure où les transistors utilisés pour l'amplification pourront être remplacés par de simples fils électriques.

La phase de transmission peut comprendre aussi une phase de traitement du signal électrique permettant de corriger sa valeur pour imposer une variation en fonction de l'énergie mécanique qui soit différente, voire adaptable, en fonction de la zone de vitesse de véhicule dans laquelle on se trouve. Par exemple on peut envisager trois zones, une première zone de 0 à 50km/h, on se trouve usuellement en ville ou à un carrefour ou à un virage serré, une deuxième zone de 50 à 90km/h, on roule typiquement sur une départementale ou sur une nationale, et une troisième zone de 90 à 130km/h (voire plus si la législation de limitation de vitesse le permet), où l'on roule sur autoroute. Ce raffinement de traitement adapté à la plage de vitesses ajoute toutefois à la complexité du système. Avantageusement, l'une et ou l'autre desdites transformations entre énergie mécanique et énergie électrique est réalisée par déformation d'un élément piézoélectrique.

Les éléments piézoélectriques présentent de faibles déformations, de l'ordre d'un à deux millimètres, ce qui est d'une part suffisant pour transmettre l'énergie du flux aérodynamique ou pour transmettre la déformation au miroir, et ce qui est d'autre part suffisamment limité pour ne provoquer que des déplacements de pièce ou de matière très réduits au niveau de la surface extérieure du boîtier du rétroviseur, ce qui permettra de respecter plus facilement les contraintes sévères en termes de jeux et affleurements qui règnent au niveau du rétroviseur lequel est une pièce particulièrement visible et regardée par le client, c'est-à-dire par le conducteur du véhicule, en raison de son caractère proéminent. Par ailleurs, une course trop importante de déplacement de pièce au niveau du rétroviseur aurait tôt fait de générer un sifflement important, notamment à vitesse de véhicule élevée, qui deviendrait rapidement difficilement supportable ou en tous cas très gênant pour le conducteur du véhicule.

De préférence, l'élément piézoélectrique au niveau de l'actionneur de déformation du miroir ne s'étend pas sur plus d'un tiers de la largeur du miroir, avantageusement sur environ un quart de la largeur du miroir, préférentiellement sur au moins un dixième de la largeur du miroir pour avoir un effet vraiment notable. Il s'étend derrière la face cachée du miroir, à l'intérieur du boîtier du rétroviseur.

Au lieu d'un élément piézoélectrique, il peut être envisagé d'utiliser un potentiomètre, c'est-à-dire une résistance variable dont le curseur serait positionné en fonction du déplacement ou de la déformation de la partie mobile du capteur de flux aérodynamique.

De préférence, seule l'extrémité extérieure du miroir subit une déformation pour augmenter la largeur du champ de vision du miroir lorsque la vitesse du véhicule augmente. L'extrémité du miroir la plus extérieure par rapport au véhicule, selon bien sûr la direction de la largeur du véhicule, lorsqu'elle est sphérique, voit son rayon de courbure diminuer afin d'augmenter la largeur du champ de vision du miroir. Cette extrémité du miroir a déjà souvent un rayon de courbure différent de celui de la partie centrale réglementairement définie du miroir de rétroviseur. Le miroir de rétroviseur est donc souvent un miroir bimorphe. La courbure de la partie centrale réglementaire vaut environ 1260mm à plus ou moins 60mm. La déformation de la partie extérieure du miroir peut descendre son rayon de courbure avantageusement jusqu'à une valeur située entre 600mm et 700mm.

Le procédé selon l'invention revient dans le cas considéré, lorsque la vitesse du véhicule augmente, à augmenter davantage l'augmentation du champ de vision du miroir du rétroviseur offerte par la partie du miroir dépassant de la zone centrale réglementaire et présentant une sphéricité ou une courbure différente de celle de ladite zone centrale réglementaire, et ceci pour compenser la perte naturelle de largeur de champ de vision de l'oeil humain à vitesse élevée. Dans une première famille préférentielle de modes de réalisation, l'énergie du flux aérodynamique est transformée en énergie mécanique par le déplacement d'un élément mobile du boîtier du rétroviseur.

La transformation d'énergie du flux aérodynamique en énergie mécanique par déplacement d'élément mobile présente l'avantage, par rapport à une transformation par déformation d'une pièce, de maintenir une plus grande solidité au niveau de la surface extérieure du boîtier du rétroviseur, ce qui rend globalement le rétroviseur moins fragile, aussi bien au niveau de sa structure qu'au niveau de son revêtement, comme par exemple la peinture, qui présentera moins de risque de s'écailler.

L'élément mobile est avantageusement monté sur ressorts, car ceux-ci permettent une course limitée fluide avec une grande endurance et une faible usure du système de fixation de l'élément mobile sur le boîtier du rétroviseur. En effet, les déplacements de l'élément mobile seront extrêmement nombreux au cours de la vie du véhicule.

L'élément mobile est dans une première réalisation avantageuse, le répétiteur d'indicateur de changement de direction (ou clignotant) monté sur le rétroviseur. L'élément mobile est dans une deuxième réalisation avantageuse, une portion de la coque avant du boîtier du rétroviseur.

Dans une deuxième famille préférentielle de modes de réalisation, l'énergie du flux aérodynamique est transformée en énergie mécanique par la déformation d'une pièce du boîtier dont une partie reste fixe par rapport au boîtier du rétroviseur. La transformation d'énergie du flux aérodynamique en énergie mécanique par déformation d'une pièce présente l'avantage, par rapport à une transformation par déplacement d'élément mobile, d'un coût de revient de la fabrication qui sera moindre, surtout si la déformation de pièce est rendue réalisable par une variation d'épaisseur au sein d'une même matière plutôt que par l'utilisation de plusieurs matières pour cette pièce déformable. Un exemple de pièce déformable serait la partie bombée vers l'avant, de la coque du boîtier de rétroviseur.

De préférence, le capteur est disposé sur la face avant du boîtier du rétroviseur. La face avant du boîtier est celle qui est en prise au vent lorsque le véhicule se déplace (vers l'avant), car c'est là qu'on a la meilleure sensibilité du capteur. Le capteur pourrait toutefois être installé sur une paroi latérale du boîtier ou même à l'arrière du rétroviseur au niveau du miroir, il mesurerait dans ces cas là plutôt les perturbations et les turbulences indirectement provoquées par le flux aérodynamique que le flux aérodynamique directement, mais on peut aussi par ce moyen remonter à la vitesse de déplacement du véhicule.

Un véhicule inclut notamment un camion, une voiture, un bus, un bateau. Un véhicule est de préférence un véhicule à moteur, avantageusement terrestre. Un véhicule est préférentiellement une voiture.

L'invention va maintenant être décrite plus en détail à l'aide des figures ci-après, données à titre d'exemples illustratifs et non limitatifs, où :
- la figure 1 représente schématiquement une vue par devant d'un rétroviseur de véhicule ;
- la figure 2 représente schématiquement une vue par au-dessus de l'avant d'un véhicule intégrant un rétroviseur ;
- la figure 3 représente schématiquement une vue par derrière d'un rétroviseur de véhicule ;
- la figure 4 représente schématiquement une vue plutôt par au-dessus de l'avant d'un véhicule intégrant un rétroviseur avec mise en évidence des différentes parties du champ de vision du conducteur de véhicule ;
- la figure 5 représente schématiquement une vue de l'intérieur d'un rétroviseur de véhicule selon l'invention, avec un miroir au repos à vitesse de véhicule nulle ;
- la figure 6 représente schématiquement une vue de l'intérieur d'un rétroviseur de véhicule selon l'invention, avec un miroir déformé à vitesse de véhicule notable ;
- la figure 7 représente schématiquement un synoptique de la chaîne de transmission de l'énergie entre le flux aérodynamique rencontré par le boîtier du rétroviseur et la déformation du miroir du rétroviseur, dans un procédé selon l'invention.

Sauf mention contraire, dans toute la suite du texte, les notions avant, arrière, gauche, droite, s'entendent de l'orientation du véhicule sur lequel est monté le rétroviseur selon l'invention et qui met en oeuvre le procédé selon l'invention. Cette orientation correspond à l'orientation du rétroviseur lui-même.

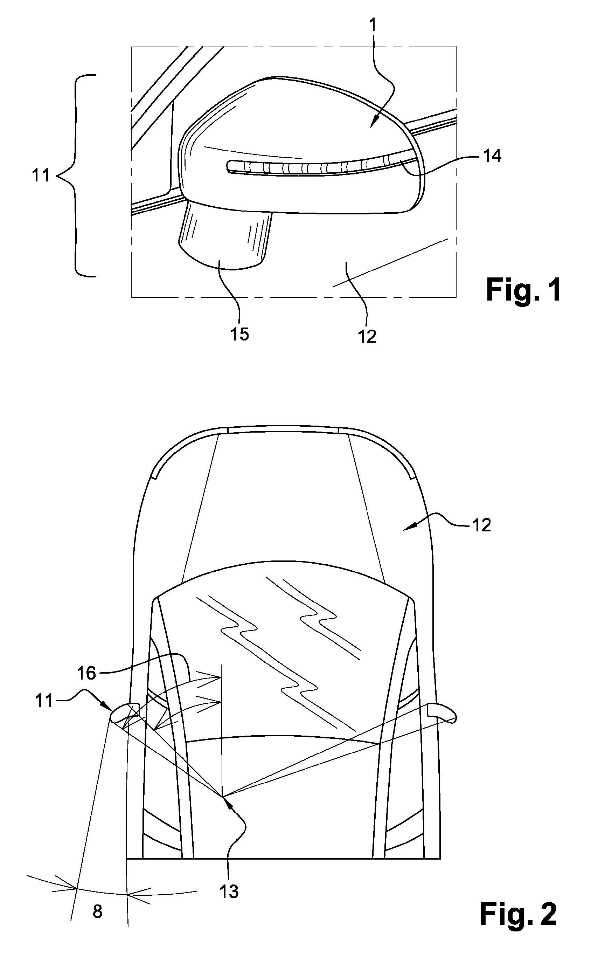

La figure 1 représente schématiquement une vue par devant d'un rétroviseur de véhicule. Un rétroviseur 11 est solidarisé à un avant 12 de véhicule par l'intermédiaire d'une embase 15. Le rétroviseur 11 comprend sur sa face arrière un miroir non visible sur la figure 1 et un boîtier 1 profilé au niveau de sa face avant. Sur la face avant du boîtier 1 se trouve avantageusement un répétiteur 14 d'indicateur de changement de direction.

La figure 2 représente schématiquement une vue par au-dessus de l'avant d'un véhicule intégrant un rétroviseur. Sur l'avant 12 du véhicule, un rétroviseur 11 est fixé du côté gauche du véhicule. Par rapport à l'oeil 13 du conducteur, le conducteur dispose d'un champ de vision directe 16 et d'un champ de vision arrière ou rétrovision 8 qui correspond ici seulement à la partie réglementairement définie du rétroviseur, sans augmentation de la largeur du champ de rétrovision par adjonction d'une partie supplémentaire de miroir à courbure distincte de celle de la partie centrale réglementaire.

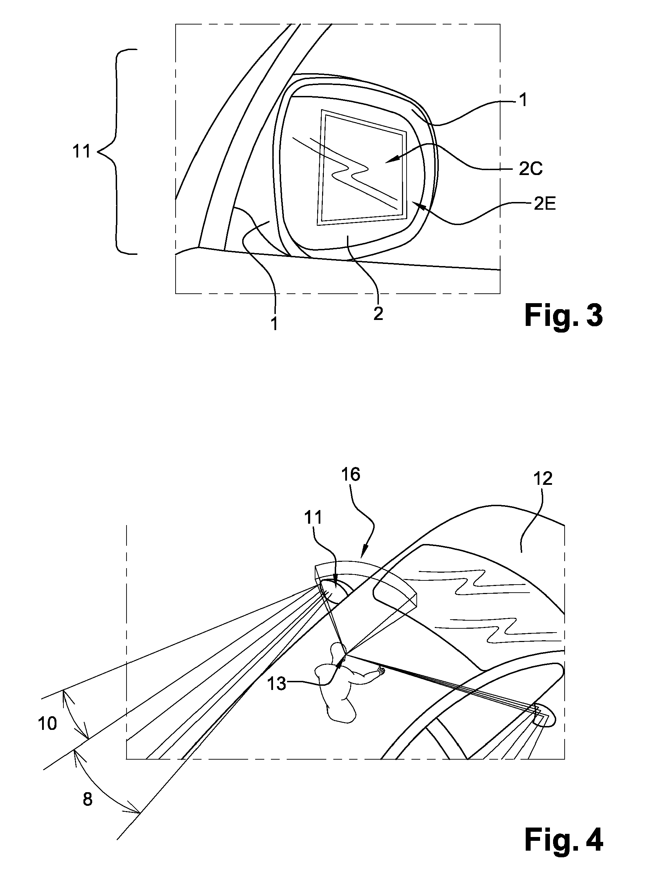

La figure 3 représente schématiquement une vue par derrière d'un rétroviseur de véhicule. Le rétroviseur 11 est ici fixé sur le côté gauche de l'avant du véhicule. A l'arrière et un peu à l'intérieur du boîtier 1 se trouve le miroir 2 comprenant notamment d'une part une partie centrale réglementaire 2C correspondant au « trapèze de rétrovision réglementaire », et d'autre part une partie extrême 2E, située vers l'extérieur du véhicule, correspondant à une zone libre dans laquelle on peut faire varier la courbure pour modifier le champ de vision, encore appelé champ de rétrovision, du miroir 2, en fonction des variations de la vitesse du véhicule.

La figure 4 représente schématiquement une vue plutôt par au-dessus de l'avant d'un véhicule intégrant un rétroviseur avec mise en évidence des différentes parties du champ de vision du conducteur de véhicule. Un rétroviseur 11 est fixé sur l'avant 12 du véhicule, du côté gauche. A partir du point oeil 13 du conducteur, sont représentés le champ de vision 16 direct du conducteur, champ de vision vers l'avant, le champ de vision central 8 du miroir 2 du rétroviseur 11, champ de rétrovision car de vision vers l'arrière, et le champ de vison extérieur 10 du miroir 2 du rétroviseur 11 , également champ de rétrovision, qui élargit en fait le champ de vision central 8.

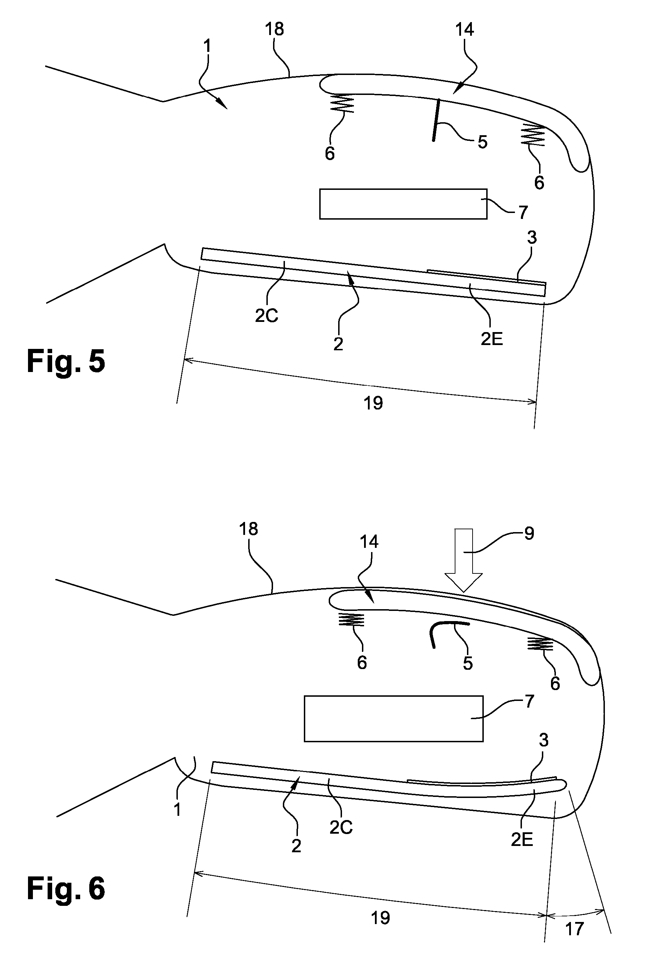

La figure 5 représente schématiquement une vue de l'intérieur d'un rétroviseur de véhicule selon l'invention, avec un miroir au repos à vitesse de véhicule nulle. Il n'y a donc pas de flux aérodynamique notable auquel est soumis le rétroviseur, et en particulier le boîtier 1 du rétroviseur. Sur la face avant 18 du boîtier 1 du rétroviseur se trouve le répétiteur 14 d'indicateur de changement de direction qui joue le rôle de partie intégrante du capteur de flux aérodynamique en étant rendu mobile par rapport au reste du boîtier 1. Le répétiteur 14 d'indicateur de changement de direction est monté sur des ressorts 6 qui lui donnent sa mobilité par rapport au boîtier 1.

Contre la face cachée du répétiteur 14 d'indicateur de changement de direction se trouve un élément piézoélectrique 5 qui se déforme d'autant que le répétiteur d'indicateur de changement de direction comprime les ressorts 6 et rentre dans le boîtier 1, produisant un courant électrique d'autant plus fort que sa déformation mécanique est importante, ce qui correspond à un flux aérodynamique extérieur d'autant plus élevé, ce qui provient d'une vitesse de déplacement du véhicule d'autant plus élevée.

Des moyens de transmission 7 transmettent l'énergie électrique issue de l'élément piézoélectrique 5 vers l'élément piézoélectrique 3 qui se trouve contre la face cachée du miroir 2, et plus précisément contre la face cachée de la partie extrême ou extérieure 2E du miroir 2 située plus à l'extérieur du véhicule que la partie centrale réglementaire 2C du miroir 2. Cette transmission peut être effectuée avec ou sans amplification, de préférence avec amplification, avec ou sans traitement, de préférence sans autre traitement que l'amplification.

En option, un marquage discret mais visible sur la surface du miroir 2, à la jonction entre les zones 2E et 2C du miroir 2 pourrait être ajouté afin d'indiquer en le matérialisant légèrement le changement de courbure du miroir 2 au niveau de cette jonction.

Le miroir 2 présente un champ de vision, ou plus précisément de rétrovision, 19 qui est la somme et même la juxtaposition des champs de vision 8 et 10 déjà représentés sur la figure 2. L'élément piézoélectrique ne s'étend donc que sur la partie la plus extérieure au véhicule, du miroir 2, à savoir sur la partie extrême 2E, distincte de la partie centrale réglementaire 2C. La figure 6 représente schématiquement une vue de l'intérieur d'un rétroviseur de véhicule selon l'invention, avec un miroir déformé à vitesse de véhicule notable. Le véhicule roule à vitesse plus élevée qu'au niveau de la figure 5, disons même à vitesse relativement élevée. Le boîtier 1, au niveau de sa face avant 18, est soumis à un flux aérodynamique 9, au moins notable voire important, dont la flèche indique la direction, qui appuie sur l'ensemble du boîtier 1 et en particulier sur le répétiteur 14 d'indicateur de changement de direction qui s'enfonce légèrement dans le boîtier 1 en comprimant les ressorts 6 et en déformant l'élément piézoélectrique 5.

La déformation mécanique de l'élément piézoélectrique 5 entraîne la création d'un courant électrique à son niveau, courant électrique qui est transmis par les moyens de transmission 7 vers l'élément piézoélectrique 3, de préférence après amplification, ce qui a alors pour effet de déformer mécaniquement l'élément piézoélectrique 3. La déformation mécanique de l'élément piézoélectrique 3 joue le rôle d'actionneur de déformation entraînant, grâce à sa solidarité avec la partie extrême 2E du miroir 2, la déformation de cette partie extrême 2E du miroir 2, ce qui a pour conséquence ultime l'augmentation du champ de vision du miroir d'une portion supplémentaire 17 de champ de vision qui s'ajoute à la portion 19 déjà existante. La déformation du miroir 2 s'effectue plutôt vers l'intérieur du boîtier 1 .

En option, l'élément piézoélectrique 3 peut être remplacé par plusieurs éléments piézoélectriques 3 différents entre eux et dont les différentes déformations permettraient une déformation non linéaire du miroir 2.

Plus la vitesse de déplacement du véhicule est élevée, plus la translation du répétiteur 14 d'indicateur de changement de direction vers l'intérieur du boîtier 1 est importante, plus la compression des ressorts 6 est importante, plus la déformation mécanique de l'élément piézoélectrique 5 est importante, plus le courant électrique généré au niveau de l'élément piézoélectrique 5 est important, plus le courant transmis par les moyens de transmission 7 vers l'élément piézoélectrique 3 est important, plus la déformation mécanique de l'élément piézoélectrique 3 est importante, plus la déformation de la partie extrême 2E du miroir 2 est importante, plus l'augmentation 17 de champ de vision (ou de champ de rétrovision, les termes sont employés l'un pour l'autre dans tout le texte sauf mention contraire) est importante. Il y a en fait pratiquement une chaîne de transmission proportionnelle au sens large (ce n'est pas une proportionnalité stricte du type y = ax avec a constante), qui augmente le champ de vision du miroir 2 au fur et à mesure que la vitesse de déplacement du véhicule augmente, le facteur de proportionnalité, loin d'être une constante, pouvant être variable et même subir les évolutions d'une fonction relativement complexe.

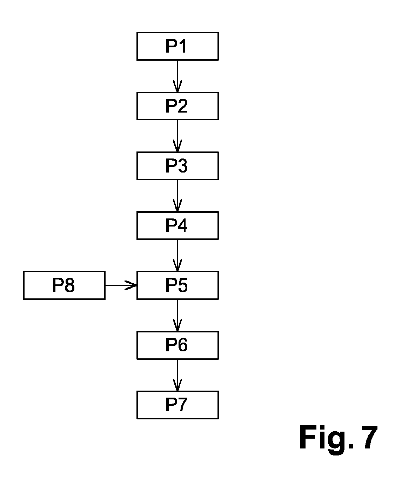

La figure 7 représente schématiquement un synoptique de la chaîne de transmission de l'énergie entre le flux aérodynamique rencontré par le boîtier du rétroviseur et la déformation du miroir du rétroviseur, dans un procédé selon l'invention.

Dans une phase P1, lorsque le véhicule roule à une certaine vitesse notable, le rétroviseur et en particulier la surface avant du boîtier du rétroviseur, sont soumis à un flux aérodynamique, c'est-à-dire rencontrent la résistance de l'air qui est d'autant plus importante que la vitesse de déplacement du véhicule est élevée.

Dans une phase P2, ce flux d'air exerce un effort sur le capteur de flux aérodynamique. L'exercice de cet effort se traduit par le déplacement d'un élément mobile du capteur. Dans une phase P3, le déplacement d'un élément mobile du capteur exerce une contrainte sur un premier élément piézoélectrique qui lui est solidarisé.

Dans une phase P4, sous la contrainte précédente, le premier élément piézoélectrique se déforme mécaniquement entraînant la création d'une première énergie électrique.

Dans une phase P5, cette première énergie électrique est transmise sous la forme d'une deuxième énergie électrique au niveau d'un deuxième élément piézoélectrique, avec une phase concomitante d'amplification P8.

Dans une phase P6, la deuxième énergie électrique traverse le deuxième élément piézoélectrique qui se déforme mécaniquement.

Dans une phase P7, la déformation mécanique du deuxième élément piézoélectrique déforme à son tour l'extrémité du miroir du rétroviseur, ce qui a pour conséquence l'augmentation du champ de vision du miroir, ce qui compense en partie la perte naturelle de champ de vision de l'oeil à vitesse élevée de déplacement de véhicule.

## Revendications

1. Procédé de modification de l'étendue (19) du champ de vision d'un miroir (2) de rétroviseur (11) de véhicule en fonction de la vitesse du véhicule, à partir de la valeur du flux aérodynamique capté par le boîtier (1) du rétroviseur (11).

2. Procédé selon la revendication 1, **caractérisé en ce que** la modification (17) de l'étendue (19) du champ de vision du miroir (2) de rétroviseur (11) est réalisée par déformation du miroir (2).

3. Procédé selon l'une quelconque des revendications précédentes, **caractérisé en ce que** l'énergie du flux aérodynamique capté par le boîtier (1) du rétroviseur (11) est transmise au miroir (2) du rétroviseur (11).

4. Procédé selon l'une quelconque des revendications précédentes, **caractérisé en ce que** la transmission d'énergie comprend une première phase de transformation (P4) d'énergie mécanique provenant du flux aérodynamique en énergie électrique suivie d'une deuxième phase de transmission (P5) de l'énergie électrique suivie d'une troisième phase de transformation (P6) de ladite énergie électrique en énergie mécanique déformant le miroir (2).

5. Procédé selon la revendication 4, **caractérisé en ce que** l'une et ou l'autre desdites transformations (P4, P6) entre énergie mécanique et énergie électrique est réalisée par déformation d'un élément piézoélectrique (5, 3).

6. Procédé selon l'une quelconque des revendications précédentes, **caractérisé en ce que** seule l'extrémité extérieure (2E) du miroir subit une déformation pour augmenter la largeur du champ de vision du miroir (2) lorsque la vitesse du véhicule augmente.

7. Procédé selon l'une quelconque des revendications 1 à 6, **caractérisé en ce que** l'énergie du flux aérodynamique est transformée en énergie mécanique par le déplacement d'un élément mobile (14) du boîtier (1) du rétroviseur (11).

8. Procédé selon l'une quelconque des revendications 1 à 6, **caractérisé en ce que** l'énergie du flux aérodynamique est transformée en énergie mécanique par la déformation d'une pièce du boîtier (1) dont une partie reste fixe par rapport au boîtier (1) du rétroviseur (11).

9. Rétroviseur de véhicule comprenant un boîtier (1) et un miroir (2) à étendue (19) de champ de vision variable, **caractérisé en ce qu'**il comprend aussi :
- un capteur (14) de flux aérodynamique disposé sur la surface extérieure du boîtier (1) ;
- un actionneur (3) de déformation du miroir (2) de manière à faire varier l'étendue (19) de son champ de vision ;
- des moyens de transmission (7) entre le capteur (14) et l'actionneur (3) disposés de manière à ce que le champ de vision du miroir varie en fonction du flux aérodynamique capté par le capteur (14).

10. Rétroviseur de véhicule selon la revendication 9, **caractérisé en ce que** les moyens de transmission (7) sont des moyens de transmission de l'énergie du flux aérodynamique capté par le capteur (14) du boîtier (1) du rétroviseur (11) vers l'actionneur (3) de déformation du miroir (2) du rétroviseur (11).

11. Rétroviseur de véhicule selon la revendication 9 ou 10, **caractérisé en ce que** le capteur (14) est disposé sur la face avant (18) du boîtier (1) du rétroviseur (11).

12. Véhicule comprenant un rétroviseur (11) de véhicule selon l'une quelconque des revendications 9 à 11.
